(19) 

Europäisches
Patentamt
European
Patent Office
Office européen
des brevets

(11)  **EP 3 928 265 B1**

(12)  # EUROPEAN PATENT SPECIFICATION

(45)  Date of publication and mention
      of the grant of the patent:
      **28.01.2026  Bulletin 2026/05**

(21)  Application number: **20704931.3**

(22)  Date of filing: **29.01.2020**

(51)  International Patent Classification (IPC):
      **G06Q 10/30** *(2023.01)*

(52)  Cooperative Patent Classification (CPC):
      **G06Q 10/30; Y02W 90/00**

(86)  International application number:
      **PCT/FI2020/050050**

(87)  International publication number:
      **WO 2020/169876 (27.08.2020 Gazette 2020/35)**

(54)  **PROVIDING USER GUIDANCE ON ERASURE PROCESS SELECTION BASED ON
      ACCUMULATED ERASURE REPORTS**

      BEREITSTELLUNG EINER BENUTZERANLEITUNG BEI EINER LÖSCHPROZESSAUSWAHL AUF
      DER GRUNDLAGE VON AKKUMULIERTEN LÖSCHUNGSBERICHTEN

      FOURNITURE D'UN GUIDAGE UTILISATEUR SUR UNE SÉLECTION DE PROCESSUS
      D'EFFACEMENT SUR LA BASE DE RAPPORTS D'EFFACEMENT ACCUMULÉS

(84)  Designated Contracting States:
      **AL AT BE BG CH CY CZ DE DK EE ES FI FR GB
      GR HR HU IE IS IT LI LT LU LV MC MK MT NL NO
      PL PT RO RS SE SI SK SM TR**

(30)  Priority:  **22.02.2019  FI 20195138**

(43)  Date of publication of application:
      **29.12.2021  Bulletin 2021/52**

(73)  Proprietor: **Blancco Technology Group IP Oy
      80110 Joensuu (FI)**

(72)  Inventors:
      • **FABRITIUS, Mikko
        80110 Joensuu (FI)**
      • **ÖBERG, Daniel
        80110 Joensuu (FI)**

      • **ERNST, Russ
        80110 Joensuu (FI)**

(74)  Representative: **Marks & Clerk LLP
      15 Fetter Lane
      London EC4A 1BW (GB)**

(56)  References cited:
      • **RICHARD KISSEL ET AL: "Guidelines for Media
        Sanitization", NATIONAL INSTITUTE OF
        STANDARDS AND TECHNOLOGY, 15 August
        2014 (2014-08-15), XP055537214, Retrieved from
        the Internet <URL:https://nvlpubs.nist.gov/
        nistpubs/specialpublications/nist.sp.800-88r1.
        pdf> [retrieved on 20181220], DOI: 10.6028/
        NIST.SP.800-88r1**

**Description**

FIELD OF THE INVENTION

The present invention relates to data security and particularly to providing means for providing user guidance for performing an erasure process on a device.

BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

A data erasure process for a mobile device or other computing device cannot typically be performed fully automatically. Instead, manual user input needs to be provided to erasure client software for it to successfully perform the data erasure process. To be able to provide the necessary user input specifying, for example, the data erasure process to be used, the person managing said process is often required to have supporting documentation available, some prior knowledge and/or expertise regarding different available data erasure processes. Even if the user operating the process is knowledgeable of the data erasure process, human error may still easily occur, especially if multiple processes are run in parallel by the user. Therefore, it would be beneficial in terms of speed and accuracy of the overall process if more automated means for providing the user with device-specific information on the data erasure process would be available.Richard Kissel ET AL: "Guidelines for Media Sanitization",National Institute of Standards and Technology, 15 August 2014 (2014-08-15), XP055537214,DOI: 10.6028/NIST.SP.800-88r1 discloses guidelines for media sanitization.

BRIEF DESCRIPTION OF THE INVENTION

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

BRIEF DESCRIPTION OF THE DRAWINGS

In the following the invention will be described in greater detail by means of preferred embodiments with reference to the attached drawings, in which

Figure 1 illustrates a system according to embodiments;
Figures 2 to 5 illustrate processes according to embodiments; and
Figures 6 and 7 illustrate apparatuses according to embodiments.

DETAILED DESCRIPTION OF EMBODIMENTS

The embodiments to be discussed below seek to facilitate the process of performing data erasure. Data erasure (equally called data sanitization or data wiping) is a software-based process of overwriting and/or obfuscating data which aims to completely destroy and/or render unrecoverable all electronic data residing on a hard disk drive or other digital media. By overwriting the data on all sectors of the storage device and/or changing the encryption key used to encrypt and decrypt the data, the data is rendered unintelligible. Typically, after the data erasure the storage device still remains operable.

Many different government and industry standards and methods have been created for software-based data erasure such as United States Department of Defence (U.S. DoD) 5220.22-M(ECE) and Communications Security Establishment Canada (CSEC) ITSG-06. The different standards (or methods or processes) differ from each other, for example, in the number of times the data is overwritten (e.g., 1-35 passes may be used), the overwrite pattern used and whether a verification that all the data have been removed is required. The overwrite pattern defines which character (e.g., a one, a zero, a pseudo-random character) is used for overwriting in each pass and it may have varying degrees of randomness depending on the method. To give an example of the operation of an erasure process, the CSEC ITSG-06 erasure process performs data erasure in three passes in the following manner:

Pass 1: Overwriting the data with a zero or a one;
Pass 2: Overwriting the data with the complement of the previously written character (e.g., a one if a zero was used in Pass 1); and
Pass 3: Overwriting the data with a pseudo-random character and verifying the (over)write.

In addition to or as an alternative for overwriting, (data) erasure standards may require issuing one or more firmware sanitization commands to the storage device. These commands aim to cause the storage device to perform one or more data erasure functions built into the storage device itself. Available firmware sanitization commands depend on the technology-specific standards, according to which the storage device is designed.

To give an example of a scenario where firmware sanitization commands may be employed, (data) erasure standards may require the encryption key of an encrypting storage devices to be changed (i.e., cryptographic erasure). This may be achieved by issuing one or more specific firmware sanitization command. As a further example, the encryption key of an encrypting storage device designed according to the AT Attachment (ATA) interface standard may be changed by issuing a Crypto Erase EXT command to the encrypting storage device.

Different (data) erasure processes (following a standard or a method) may be most suitable or expedient for different storage devices. For example, a different number of overwrite passes may be required for different storage media to fully ensure that no data can be recovered later. For example, while a single pass may be considered acceptable for some hard disc drives (HDD), for modern flash based storage devices, such as solid state drives (SSD), multiple passes and/or firmware sanitization commands according to the technology-specific standards may often be required to fully ensure that no data can be recovered using forensic analysis. In some cases, multiple acceptable erasure process options may be available, but their properties for a given computing device or storage device may differ, for example, in terms of probability of success and expected duration of the erasure process. For these reasons, it is preferable that a user of an erasure software is given the option to manually select an erasure process from a plurality of different erasure processes and perhaps even to tune some of the erasure process properties associated with selected erasure process. However, making such a selection requires the user to have supporting documentation available and/or to have considerable personal expertise on the different erasure processes and their suitability for different types of storage media. Making a wrong selection may result in wasted time as multiple overwrite passes are conducted when they are not necessary or in the worst case incomplete or insufficient erasure of the data. The embodiments solve or at least alleviate this problem by offering an automated means for providing device-specific information on the erasure processes available to the user (or at least on some of them) to facilitate the decision-making regarding the erasure process selection.

The erasure processes discussed in relation to embodiments may be any known data erasure (or equally sanitization or wiping) processes (following a standard or a method) for erasing data such that it may no longer be recovered by standard data recovery means. For example, the erasure process used may be of one of the following types (the number of passes required given in parentheses, if specified in the corresponding standard or method): Air Force System Security Instruction 5020 (2 passes), U.S. DoD 5220.22-M(ECE) (7 passes), U.S. DoD 5220.22-M(E) (3 passes), U.S. DoE M 205.1-2, German BSI-2011-VS (4 passes), German BSI-GS (1 pass), German BSI-GSE (2 passes), U.K. CESG CPA - Higher Level (3 passes), Blancco Extended Firmware Based Erasure (3 passes), Blancco Firmware Based Erasure (2 passes), HMG Infosec Standard 5, Higher Standard (3 passes), HMG Infosec Standard 5, Lower Standard (1 pass), National Computer Security Center (NCSC-TG-025) (3 passes), Blancco SSD Erasure, Bruce Schneier's algorithm (7 passes), the Gutmann method, British HMG IS5, Canadian RCMP TSSIT OPS-II, Communications Security Establishment Canada ITSG-06, NAVSO-P-5239-26 (3 passes), Russian GOST R 50739-95, U.S. Army AR380-19, U.S. Navy OPNAVINST 5239.1A (3 passes), NIST SP 800-88 Clear or NIST SP 800-88 Purge, NSA 130-1 (3 passes), HMG Infosec Standard 5, Lower Standard (1 pass), HMG Infosec Standard 5, Higher Standard (3 passes), one random pass and 1-pass zero.

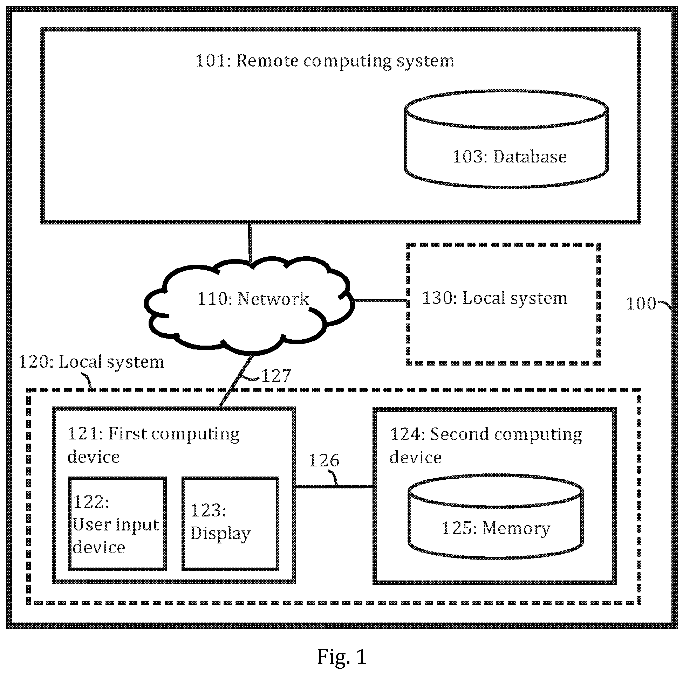

An architecture of a communications system to which embodiments of the invention may be applied is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures.

Figure 1 illustrates a system 100 comprising a remote computing system 101 which is connected via a communications network 110 to one or more local systems 120, 130. Each local system 120, 130 comprises at least a first computing device 121 connected via a first interface 126 to a second computing device 124 and via a second interface 127 to the communications network 110 (shown in Figure 1 only for the local system 120 for simplicity). In some embodiments, the first computing device 121 may be connected via first interfaces 126 to two or more second computing devices 124 simultaneously.

The first computing device 121 is a computing device used for performing a data erasure process (following a standard or a method) for erasing (or equally sanitizing or wiping) data stored to the second computing device 124 (or specifically, to the memory 125 of the second computing device 124) in a controlled manner. To be able to perform said data erasure process, the first computing device 121 may be configured, for example, to access information (e.g., device information) stored to the second computing device 124, send information (e.g., device parameters) to the remote computing system 101 via the communications network 110 using the second interface 127, receive information (e.g., expected erasure process properties and/or other process information) from the remote computing system 101 via the communications network 110 using the second interface 127 and erase information stored to the memory 125 of the second computing device 124 using a specific data erasure process. Moreover, the first computing device 121 may comprise at least one user input device 122 which provides a user of the first computing device 121 means for inputting information, for example, in connection with the data erasure process. The at least one user input device 122 may comprise, for example, a keyboard, a touch screen, a mouse and/or a touch pad. The first computing device 121 further comprises a display 123 through which the user may be able to monitor the data erasure process. The first interface 126 may be used, by the first computing device 121, at least for retrieving device information from the second computing device 124 (or specifically from the memory 125) and performing the data erasure process. The first computing device 121 may be connected via the first interface 126 to the second computing device 124 using a wire or a cable such as a USB (Universal Serial Bus)-to-USB cable, a USB-to-mini-USB cable or a USB-to-micro-USB cable, using a docking station or wirelessly (e.g., via WiFi or Bluetooth). The first computing device 121 may be configured to run dedicated erasure client software for guiding a user or an operator of the first computing device 121 through the erasure process for the second computing device 124.

The second computing device 124 is a computing device comprising a memory 125 which is to be erased using the first computing device 121. The second computing device 124 may comprise altogether one or more memories of which at least one is to be erased (fully or partly). While the first computing device 121 may be actively operated by a user or an operator, the second computing device 124 may be assumed to be only receiving inputs via the first computing device 121 (that is, not via any possible user input devices of the second computing devices 124) during the processes according to embodiments to be discussed in the following.

Each of the first and the second computing device 121, 124 refer to a portable or non-portable computing device (equipment, apparatus). Computing devices which may be employed include wireless mobile communication devices operating with or without a subscriber identification module (SIM) in hardware or in software, including, but not limited to, the following types of devices: desktop computer, laptop, touch screen computer, mobile phone, smart phone, personal digital assistant (PDA), handset, e-reading device, tablet, game console, note-book, multimedia device, sensor, actuator, video camera, car, wearable computer, telemetry appliances, and telemonitoring appliances. The first and second computing devices 121, 124 may be computing device of the same type or of a different type. In a typical non-limiting embodiment, the first computing device 121 may be a desktop computer or a laptop and the second computing device 124 may be a mobile device (e.g., a smart phone, a tablet computer or a laptop). In some embodiments, the second computing device 124 may be a memory or a storage device, such as a HDD or a SSD. In general, the second computing device 124 may be any computing device comprising at least one memory and which may be electrically connected to the first computing device 121. Said at least one memory may comprise at least one internal memory and/or at least one external memory.

In some embodiments, the first computing device 121 and the second computing device 124 may be parts of a single apparatus or the second computing device 124 may be comprised within the first computing device 121. In other words, the first and second computing devices may be fixed together (as opposed to being easily detachable from each other as discussed earlier). For example, the second computing device 124 may correspond to a memory or a storage device of the first computing device 121.

The communications network 110 may comprise one or more wireless networks, wherein a wireless network may be based on any mobile system, such as GSM, GPRS, LTE, 4G, 5G and beyond, and a wireless local area network, such as Wi-Fi. Furthermore, the communications network 110 may comprise one or more fixed networks and/or the Internet.

The remote computing system 101 is a device configured to receive information (e.g., device information, such as one or more device parameters, characterizing the computing device) regarding second computing devices 124 from first computing devices 121 connected to it via the communications network 110, analyze the received information and send analysis results (e.g., expected erasure process properties characterizing an erasure process and/or other erasure guidance information) to the first computing devices 121 via the communications network 110. The analysis may be carried out specifically by an erasure analysis unit or apparatus of the remote computing system (not shown in Figure 1) and/or may be based on information stored to an erasure report database 103. The erasure report database 103 may comprise at least information on a plurality of erasure reports describing erasure processes carried out by first computing devices on second computing devices (to be described in detail in relation to further embodiments).

The other erasure guidance information sent to the first computing devices 121 by the remote computing system 101 may comprise statistical information on the erasure processes carried out for a plurality of computing devices. For example, the other erasure guidance information may comprise the probability of occurrence of each erasure process among all erasure processes described in the plurality of erasure reports maintained in the erasure report database. According to an embodiment, the other erasure guidance information comprises the probability of occurrence of the most common erasure process described in the plurality of erasure reports. According to another embodiment, the other erasure guidance information comprises the probability of occurrence of a pre-defined number of most common erasure processes (e.g., the probability of occurrence of the two most common erasure processes). This embodiment provides the advantage that the user may make the selection regarding the erasure process guided by the preferences of previous erasure processes.

The remote computing system 101 may be equally called a remote server or a server as the first computing device 121 and the remote computing system may be seen as forming a client-server relationship.

Similarly, the first computing device 121 may be equally called a local client or a client.

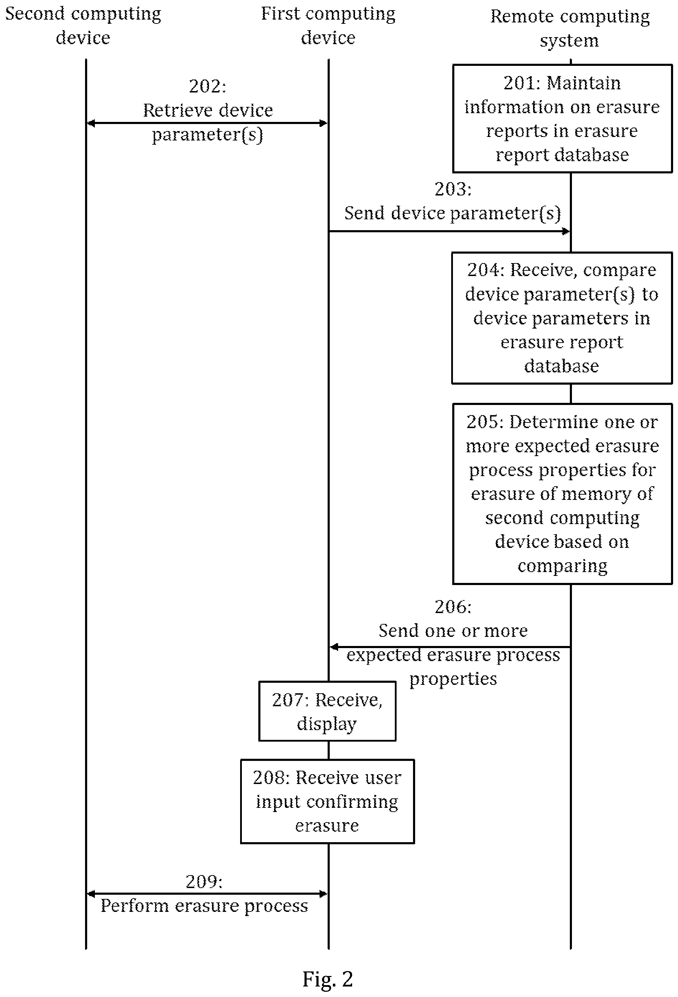

The remote computing system 101 may be fully or partly cloud-based, that is, the remote computing system 101 may be or comprise at least one computing cloud. Specifically, the erasure analysis unit and/or the database may be cloud-based. Figure 2 illustrates signaling, according to embodiments for providing a user with information on one or more (device-specific) expected erasure process properties for at least one erasure process for erasing a memory or part thereof of a second computing device and performing the erasing using a first computing device. The illustrated processes may be carried out using a system 101 of Figure 1. While the illustrated process (and also the following illustrated processes) are discussed for a first computing device acting on a single second computing device, in other embodiments multiple second computing devices may be handled by the first computing device in a similar manner simultaneously (i.e., in parallel).

According to an embodiment, the first computing device 121 is connected to multiple second computing devices 124 via USB (Universal Serial Bus) interface 126 using a USB hub. This embodiment provides the advantage that the number of USB ports in the first computing device may be fewer than the number of second computing devices handled by the first computing device. According to an embodiment, the USB hub is a 10-port USB hub.

Referring to Figure 2, it is initially assumed that the remote computing system maintains, in block 201, in an erasure report database information on a plurality of erasure reports describing erasure processes carried out for a plurality of computing device. Each erasure report comprises information on the type of erasure process which was used for erasing a memory or part thereof of a computing device, one or more erasure process properties for the completed erasure process and one or more device parameters characterizing (or defining) the computing device for which the erasure process was carried out. The type of the erasure process may be, for example, one of the types listed above. The one or more erasure process properties of an erasure process may specifically be properties of the erasure process recorded during or after the completion of the erasure process. The one or more erasure process properties in a given erasure report may comprise one or more of a duration of the erasure process and an outcome (i.e., success/failure) of the erasure process. The duration of the erasure process may be provided as the total duration and/or the (average) duration per overwrite pass. Moreover, the type of the erasure process may be considered, alternatively or in addition, as one of said one or more erasure process properties. If the erasure process was a failure, the one or more erasure process properties in the associated erasure report may only comprise information on the failure (i.e., not, for example, information on the duration of the erasure process). The one or more device parameters for a given computing device may comprise, for example, one or more of a manufacturer, a model, a year or date of manufacture, International Mobile Equipment Identity (IMEI), a device identifier other than IMEI, hardware information (e.g., component information) and memory usage. A more comprehensive list of possible erasure process properties and device parameters is provided after the discussion on Figure 2.

The process for guiding a user in selecting an erasure process for erasing a memory or part thereof of a second computing device starts when a first computing device retrieves, in messages 202, one or more device parameters characterizing the second computing device electrically connected to the first computing device from a memory of the second computing device. According to an embodiment, in addition to retrieving one or more device parameters from a memory of the second computing device, the first computing device also retrieves one or more further device parameters from a remote computing system, where these parameters are maintained in a database. According to an embodiment, said further device parameters are maintained in the same remote computing system where erasure reports are maintained in the erasure report database.

The one or more device parameters may be defined as described above in relation to the contents of an erasure report. The retrieving may specifically comprise sending, by the first computing device, a request for device parameters to the second computing device and in response to receiving the request in the second computing device, retrieving, by the second computing device, the one or more device parameters from a memory of the second computing device and sending them from the second computing device to the first computing device. After the retrieving, in messages 202, the first computing device sends, in message 203, all or some of the one or more device parameters characterizing the second computing device via a communications network to a remote computing system. The all or some of the one or more device parameters may be sent within a separate request for expected erasure process properties for the second computing device and for at least one erasure process or as a part of regular reporting operation of the first computing device. In some alternative embodiments, the second computing device may send one or more of its own device parameters (via the communications network) to the remote computing system. In some embodiments, the retrieving in block 202 may be initiated automatically in response to the second computing device being electrically connected to the first computing device.

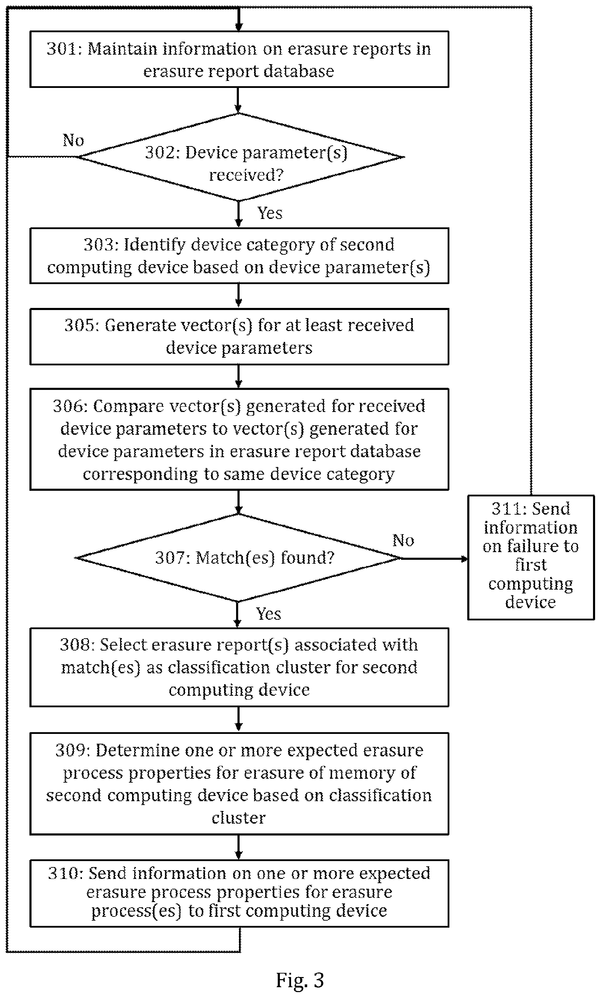

In response to receiving, in block 204, the all or some of the one or more device parameters characterizing (or defining) the second computing device from the first computing device via the communications network, the remote computing system compares, in block 204, these received one or more device parameters to device parameters comprised in the plurality of erasure reports maintained in the erasure report database. Specifically, the remote computing system may compare a set of the received one or more device parameters to corresponding sets of one or more device parameters in the plurality of erasure reports to find one or more erasure reports relevant for the second computing device. The comparing may comprise, for example, looking for matches for the one or more device parameters of the second computing device from the plurality of erasure reports. The matches may be required to be full matches and/or close or partial matches (e.g., at least some device parameters match the one or more device parameters of the second computing device or a set of device parameters are correlated with the one or more device parameters of the second computing device to certain degree). The erasure reports with matching device parameters are considered relevant (or applicable or pertinent) for the second computing device as they correspond to the same or similar computing devices as the second computing device. As certain device parameters may not be equally important from the point of view of all erasure processes, the comparing may be conducted differently for different erasure processes. For example, different set of device parameters may be compared and/or different weighting for different device parameters may be applied in the comparing so as to find relevant erasure report(s) for different erasure processes. The comparing procedure according to an embodiment is to be described in more detail in connection with Figure 3.

Based on the comparing in block 204 or more specifically on one or more erasure process properties of the one or more relevant erasure reports, the remote computing system determines, in block 205, one or more expected erasure process properties and/or other erasure guidance information for each of at least one erasure process (preferably, each of a plurality of erasure processes) for erasing the memory or part thereof of the second computing device. Each set of one or more expected process properties may be specific to the second computing device (and to devices of the same type as the second computing device), that is, they may be device-specific as well as erasure process -specific. One or more expected erasure process properties defining a particular erasure process of said at least one erasure process for the second computing device may comprise, for example, a probability of success of the erasure process (when carried out for that particular computing device) and/or an expected duration of the erasure process (for that particular computing device). The determining of the one or more expected erasure process properties may comprise, for example, analyzing set(s) of erasure process properties associated with the set(s) of one or more device parameters deemed relevant based on the comparing (e.g., being full matches or partial matches) using one or more of statistical analysis methods (e.g., correlation analysis), extrapolation, interpolation, averaging and calculating a median or a mode. The determining of the one or more expected erasure process properties may be carried out separately for each erasure process which is applicable for erasing the memory or part thereof of the second computing device and/or for which relevant erasure reports are available in the erasure report database. For example, the probability of success for a particular erasure process may be evaluated by simply comparing the number of successful erasures to the total number of erasure attempts (i.e., successful or failed erasures) and the expected duration of the erasure process may be evaluated by taking an average of the duration of successful runs of the erasure process. Obviously, only erasure reports deemed relevant based on the comparing should be taken into account in these calculations. The one or more expected erasure process properties may, in addition or alternatively, comprise information on whether the erasure process in question is suitable for the second computing device (and if not, no other information may be provided).

Once the remote computing system has determined the one or more expected erasure process properties for said at least one erasure process, it sends, in message 206, information on the one or more expected erasure process properties for said at least one erasure process to the first computing device via the communications network. In some embodiments, the remote computing system may further send information on each erasure process for which said one or more expected erasure process properties could not be determined. Said information on each erasure process may comprise simply an indication that the determining of the expected erasure process properties failed and possibly a reason for the failure (e.g., the erasure process being not applicable for erasing the memory or part thereof of the second computing device and/or relevant erasure reports being unavailable in the erasure report database).

The first computing device receives, in block 207, at least the information on the one or more expected erasure process properties and/or other erasure guidance information and subsequently (or consequently) displays, in block 207, said information to a user via a display of the first computing device. By providing the one or more expected erasure process properties for said at least one erasure process to the first computing device and displaying them to the user of the first computing device, the decision making regarding which erasure process to perform for erasing the memory or part thereof of the second computing device using the first computing device is facilitated as the user is able to clearly observe the advantages and disadvantages of each erasure process.

In response to receiving a user input confirming a selection of an erasure process (of said at least one erasure process for which device-specific erasure process information was provided) via a user input device of the first computing device, the first computing device performs, in messages 209, the selected erasure process for erasing the memory or part thereof of the second computing device. The first computing device may also record, in messages 209, erasure process properties for the selected erasure process.

The processes according to embodiments provide the advantage that since device and erasure process -specific information on the expected erasure process properties and/or other erasure guidance information are provided to the user of the first computing device, the user of the first computing device is capable of making more informed and expedient decisions regarding the selection of the erasure process since the decision on the erasure process selection does not depend solely on the expertise of the user. The erasing of memories or parts thereof of second computing devices is thus facilitated.

It should further be noted that while an experienced user of the first computing device (or specifically of the erasure client software running in the first computing device) may be able to provide a rudimentary estimate for at least some of the one or more expected erasure process properties (e.g., probability of success) based on his/her expertise, there may be unforeseen factors affecting at least some of the one or more expected erasure process properties which may be difficult to notice by the user but which may be easily detected by the process according to embodiments. Such unforeseen factors could be, for example, undocumented (or unannounced) memory component variations within seemingly similar devices. Switching the flash memory chip type, for example, could affect the speed at which the memory may be read and written, hence affecting the duration of a data erasure process. The flash memory chip type may be, in this case, one of the device parameters.

In some embodiments, the one or more erasure process properties comprised in each erasure report may comprise one or more of the following: a time stamp for the erasure report, a start time for the erasure process, an end time for the erasure process, a duration of the erasure process, name and/or type of the erasure process used, overwriting rounds (i.e., overwriting passes) used, firmware sanitization commands used, firmware sanitization command rounds used, total erasure rounds used, and an outcome of the erasure process.

In some embodiments, the one or more device parameters retrieved by the first computing device and/or comprised in each erasure report may comprise one or more of the following hardware-related information regarding the device in question: a name of the manufacturer, a name, a model, an identifier for the device, IMEI, a serial number, an internal model, chassis type, a rooting (e.g., rooted/not rooted), a (clock) speed of the processor of the computing device, a manufacturer of the processor of the computing device, a model of the processor of the computing device, and information on at least some of one or more memories of the computing device. Said information on at least some of one or more memories of the computing device may comprise, for example, a name for each or some of one or more memories of the device, capacity for each or some of said one or more memories (given, e.g., in megabytes), type of each or some of said one or more memories, a serial number for each or some of said one or more memories and/or a vendor for each or some of said one or more memories. In some embodiments, the one or more device parameters retrieved by the first computing device and/or comprised in each erasure report may further comprise one or more of the following software-related information regarding the device in question: a name of the operating system, a version of the operating system, a software used for performing the erasure process and a version of said software used for performing the erasure process. In an exemplary non-limiting embodiment, the one or more device parameters retrieved by the first computing device and/or comprised in each erasure report comprise at least information on the clock speed of the processor of the computing device, a type of each or some of said one or more memories of the computing device and a capacity of each or some of said one or more memories of the computing device. In some embodiments, the one or more device parameters retrieved by the first computing device and/or comprised in each erasure report may comprise the age of the computing device or the effective age of the computing device (evaluated, for example, based on capacity deterioration of battery of the computing device).

Figure 3 illustrates a process performed by a remote computing system according to an embodiment for providing a user with information on one or more (device-specific) expected erasure process properties for at least one erasure process for erasing a memory or part thereof of a second computing device. The illustrated process is an alternative to the process carried out by the remote computing system in blocks 201, 204, 205 and message 206 of Figure 2. The illustrated process may be carried out by the remote computing system 101 of Figure 1. Unless otherwise stated, the definitions given in relation previous embodiments may apply also here.

Similar to Figure 2, it is initially assumed in block 301 that the remote computing system maintains information on a plurality of erasure reports in an erasure report database. The remote computing system receives, in block 302, information on one or more device parameters characterizing a second computing device from a first computing device via a communications network. Blocks 301, 302 may correspond to blocks 201, 204 ("receive" only) of Figure 2.

In the embodiment illustrated in Figure 3, the comparing described in relation to block 204 of Figure 2 is divided into blocks 303 to 308. In a pre-processing phase, the remote computing system identifies, in block 303, a device category of the second computing device based on the one or more device parameters received from the first computing device. The device category may be one of the device parameters or it may be identified based on the one or more device parameters. The available device categories may comprise, for example, a mobile phone (or a smart phone), a tablet computer, a desktop computer, a laptop, a mass media storage, a smart watch, a digital still camera, a digital video camera, a mobile Internet device, a personal digital assistant (PDA), a handheld game console, a calculator and a personal navigation device or any subset of said categories. In one embodiment, the available device categories are a mobile device, a desktop computer and a laptop.

In some embodiments, the device categories may be defined in a more limited manner. For example, the device categories may be specific to a certain manufacturer, that is, a Samsung smart phone and Apple smart phone may be defined to be different device categories. Similar limitation based on some other device parameter (e.g., memory type or operating system) may be applied in other embodiments.

The remote computing system generates, in block 305, a vector based on at least one of the one or more device parameters for each of at least one erasure process. Each element of each vector may have a numerical value corresponding to a particular feature or features of the second computing device. Said at least one of the one or more device parameters based on which the vector is generated may comprise only device parameters which are considered relevant or significant in terms of the operation of that particular erasure process. Different device parameters may not be equally important for all erasure processes. For example, memory type and size may be significant device parameters for erasure processes that use overwriting while operating system may play a bigger role for cryptographic erasure (or crypto erase) processes that do not employ overwriting. Each element of a vector may correspond directly to a device parameter or it may be generated based on one or more device parameters (e.g., if the device parameter does not have a numeric value and/or if multiple device parameters are used for generating the element).

For example, the second computing device may contain according to its device parameters five storage media which have the following capacities: 1 GB, 2 GB, 3 GB, 4 GB, and 5 GB. From these device parameters, the remote computing system may form a three-element vector [15 5 3], where the first element (15) corresponds to the total size in gigabytes, the second element (5) corresponds to the number of storage media and the third element (3) corresponds to the average size of storage media.

For each of said at least one erasure process, the remote computing system compares, in block 306, the vector associated with the second computing device (and with said erasure process) to one or more corresponding vectors which were generated for one or more computing devices of the plurality of computing devices based on device parameters in the plurality of erasure reports. Here, the one or more computing devices may be specifically computing devices of the same device category as the second computing device. The one or more corresponding vectors may be generated after (or simultaneously with) the generation of the vector for the second computing device. Alternatively, each of the one or more corresponding vectors may have been generated earlier, for example, when expected erasure process properties were determined for performing an erasure process for that particular computing device or when an erasure report for that particular computing device was received by the remote computing system. A single vector or multiple vectors may be defined for each computing device depending on whether an erasure process has been carried out for that particular computing device once or multiple times. Similar to the vector(s) of the second computing device, the one or more vectors for which the vector(s) of the second computing device are compared may also be specific to a particular erasure process.

In some embodiments, the comparing in block 306 may specifically comprise calculating, for each vector of the second computing device associated with a particular erasure process, a value of a distance metric quantifying the difference (or distance) between the vector of the second computing device and corresponding one or more vectors of other computing devices (of the same device category). The distance metric may be the Euclidean distance d which may be calculated using the equation

$$ d = \sqrt{\sum_{i=1}^{n}(q_i - p_i)^2} \, , $$

where $i$ is the index, n is the number of elements in each vector, $q = [q_1 \, q_2 \, ... \, q_n]$ is the vector of one of the one or more computing devices associated with the plurality of erasure reports and $p = [p_1 \, p_2 \, ... \, p_n]$ is the vector of the second computing device. Instead of the Euclidean distance, the difference between two vectors may be quantified using another (distance) metric. For example, a weighted Euclidean distance may be employed. The weighted Euclidean distance $d_w$ may be defined using the equation

$$ d_w = \sqrt{\sum_{i=1}^{n} w_i(q_i - p_i)^2} \, , $$

where $w_i$ are weighting factors which may be defined independently for each vector element (i.e., for each index i). Different set of weighting factors may be used for different erasure processes. To give another example, standardized Euclidean distance may also be employed.

Based on the comparing in block 306, the remote computing system determines, in block 307, whether one or more of the one or more vectors associated with the same device category as the second computing device match the vector of the second computing device according to pre-defined criteria. Specifically, the pre-defined criteria may define that a value of the distance metric between the vector of the second computing device and the matching vector should be below a pre-defined (upper) threshold.

If no matches are found in block 307, the remote computing system may send, in block 311, information on the failure to determine expected erasure process properties to the first computing device via the communications network. In some embodiments, block 311 may be omitted.

If one or more matches according to pre-defined criteria is found (for any erasure process) in block 307, the remote computing system selects, for each of at least one erasure process, one or more erasure reports associated with said one or more matching vectors (matching the vector of the second computing device) as a classification cluster for the second computing device. The classification cluster may be defined separately for each erasure process. The classification cluster for a particular erasure process represents a set of erasure reports whose relevant device parameters match the corresponding device parameters of the second computing device to a sufficiently high degree for that particular erasure process. The classification cluster(s) may correspond to the one or more relevant erasure reports as discussed in relation to block 204 of Figure 2.

The remote computing system determines, in block 309, one or more expected erasure process properties and/or other erasure guidance information for at least one erasure process (preferably, a plurality of erasure processes) for erasing the memory or part thereof of the second computing device based on erasure process properties described in the one or more erasure reports in the classification cluster. The one or more expected erasure process properties and how they are derived from the erasure process properties in the erasure report database may be defined similar to as described in relation to Figure 2. In this case however, the determination in block 309 is limited to the classification cluster and may be based on, alternative or in addition to the one or more erasure process properties comprised in each relevant erasure report, to vectors associated with the classification cluster (which were derived based on said one or more erasure process properties).

In some embodiments, the comparing described in relation to blocks 303 to 308 (and/or block 204 of Figure 2) may be insensitive to different erasure processes. According to such embodiments, the determination of one or more expected erasure process properties described in relation to block 309 (and block 205 of Figure 2) comprises one or more calculation steps following the comparison. First, the remote computing system may generate a single general vector based on at least one of the one or more device parameters (received from the first computing device) without taking into account each of at least one erasure processes separately as described in relation to block 305. Second, similar to as described in relation to block 306, the general vector may then be compared to one or more corresponding vectors generated for one or more computing devices. Third, similar to as described in relation to block 307, the remote computing system may then select one or more erasure reports associated with matching vectors as a classification cluster for the second computing device. Finally, said calculation step following the comparison may comprise averaging and/or other type of scalar operations (as opposed to vector operations) of the one or more erasure process properties comprised in each relevant erasure report, for example. This embodiment provides the advantage that fewer vectors will have to be generated to determine the one or more expected erasure process properties for each of said at least one erasure process.

Also similar to the embodiment of Figure 2, once the remote computing system has determined the one or more expected erasure process properties for said at least one erasure process, it sends, in message 310, information on the one or more expected erasure process properties for said at least one erasure process to the first computing device via the communications network.

In some embodiments, the pre-processing described in relation to block 303 (i.e., identifying the device category) may be omitted. Subsequent analysis in blocks 306 to 309 may, in those cases, be carried out irrespective of the device categories associated with the second computing device and the plurality of erasure reports. In other words, instead of analyzing only erasure reports corresponding to the same device category (e.g., a smart phone) as the second computing device, all of the plurality of erasure reports (and corresponding vectors) may be involved in blocks 306 to 309.

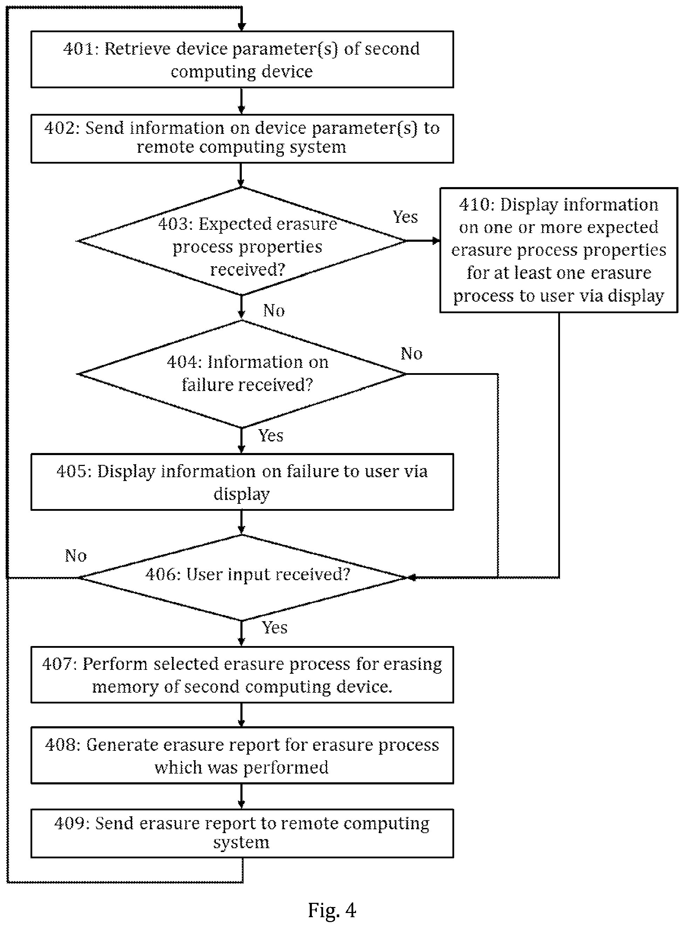

Figure 4 illustrates a process performed by a first computing device according to an embodiment for erasing a memory or part thereof of a second computing device electrically connected to the first computing device guided by information on one or more (device-specific) expected erasure process properties for at least one erasure process provided by a remote computing device. The illustrated process is an alternative to the process carried out by the first computing device in messages 202, 203, 209 and blocks 207, 208 of Figure 2. The illustrated process may be carried out by the first computing device 121 of Figure 1. Unless otherwise stated, the definitions given in relation previous embodiments may apply also here.

Referring to Figure 4, the illustrated process corresponds in many aspects to the processes performed by the first computing device in Figure 1. Actions pertaining to blocks 401, 402 may be carried out as described in relation to messages 201, 202 of Figure 2. In response to receiving one or more expected erasure process properties and/or other erasure guidance information for at least one erasure process for erasing the memory or part thereof of the second computing device from the remote computing system via the communications network in block 403, the first computing device displays, in block 410, information on the one or more expected erasure process properties and/or other erasure guidance information for each of said at least one erasure process to a user via a display of the first computing device. The information on the one or more expected erasure process properties for said at least one erasure process may also be stored to a database connected to or comprised in the first computing device. The one or more expected erasure process properties may be defined as described in relation to Figure 1. In response to failing to receive any expected erasure process properties from the remote computing system in block 403 but receiving information on a failure to determine any expected erasure process properties in block 404, the first computing device displays, in block 405, information on the failure to the user via the display of the first computing device. If neither information is received in blocks 403, 404 (e.g., within a pre-defined time limit), the process may proceed directly to block 406 skipping block 405/410 (i.e., the displaying).

In response to receiving a user input confirming a selection of an erasure process via a user input device of the first computing device in block 406, the first computing device performs, in block 407, the selected erasure process for erasing the memory or part thereof of the second computing device. The first computing device may also record, in block 407, erasure process properties for the selected erasure process. In the ideal case, the user may make the selection regarding the erasure process guided by the one or more expected erasure process properties provided for at least one erasure process. However, if no expected erasure process properties and/or other erasure guidance information were received in block 403, the user may have to make the selection based purely on his/her own expertise. The user may also be allowed to make the selection of the erasure process and initiate the erasure process without having to wait for any (possible) expected erasure process properties to be received.

In response to the selected erasure process concluding, the first computing device generates, in block 408, an erasure report for the erasure process which was carried out for the second computing device. The erasure report may be defined as described above in relation to Figure 2, that is, it may comprise at least the one or more device parameters of the second computing device and one or more erasure process properties pertaining to the completed erasure process (i.e., recorded for the selected erasure process when it was carried out for the second computing device). The one or more erasure process properties may comprise at least information on the outcome (i.e., a success or a failure) of the erasure process. If the selected erasure process was successful, the first computing device may include in the erasure report, in addition to the information on the outcome of the erasure process, one or more further erasure process properties. The one or more further erasure process properties may comprise at least a duration of the erasure process (e.g., given as total duration of the erasure process and/or duration of the erasure process per pass). In some embodiments, the one or more further erasure process properties may comprise one or more of the erasure process properties listed in relation to Figure 2. If the outcome of the erasure process was negative, the user may be prompted to repeat the erasure of the memory or part thereof of the second computing device, possibly using another erasure process.

Finally, the first computing device sends, in block 409, the generated erasure report for the completed erasure process to the remote computing system via the communications network.

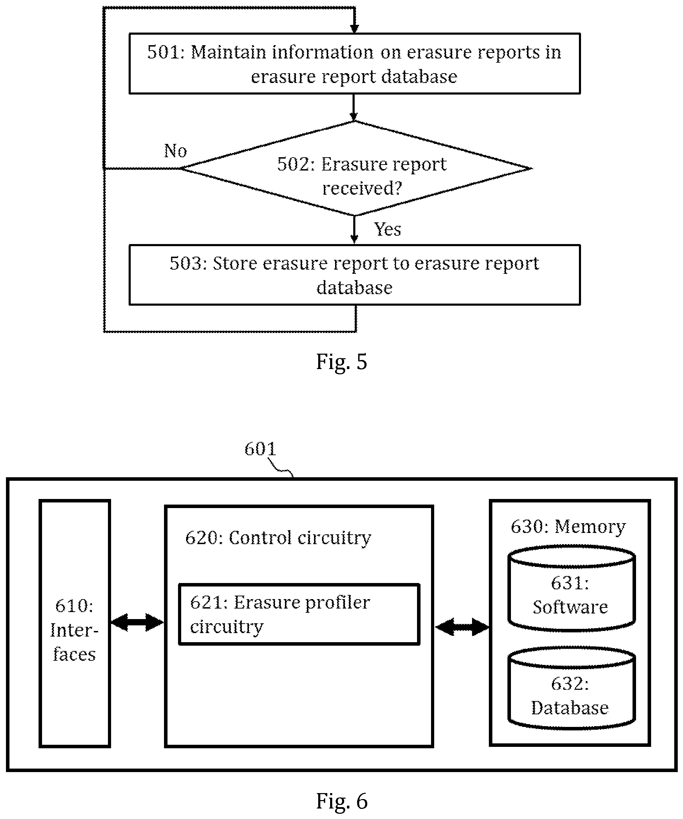

Figure 5 illustrates a simple process for maintaining the erasure report database using the remote computing system. The remote computing system may be the remote computing system 101 of Figure 1 and the erasure report database may the erasure report database 103 of Figure 1. The illustrated process may be carried out in parallel with the processes of Figures 2 and/or 4 pertaining to the remote computing system or a part of said processes.

Similar to previous embodiments, it is initially assumed in block 501 the remote computing system maintains information on a plurality of erasure reports in an erasure report database. In response to receiving an erasure report for an erasure process performed for a second computing device from a first computing device via a communications network in block 502, the remote computing system stores, in block 503, the received erasure report to the erasure report database. In some embodiments, the remote computing system may also send an acknowledgment acknowledging the successful reception of the erasure report.

As the erasure report database is constantly being updated with new erasure reports, the accuracy of the one or more expected erasure process properties provided by the remote computing system to the first computing device (e.g., in message 206 of Figure 2) increases over time. Therefore, the one or more expected erasure process properties determined for a second computing device (e.g., in block 205 of Figure 2) may be different depending on when the determining of the one or more expected erasure process properties is performed (that is, depending on how many relevant erasure reports exist in the erasure report database at that time). This way also a release of an updated version (i.e., a hardware revision) of a particular second computing device and dynamic changes in existing second computing devices such as updating to a new version of an operating system (or to a completely new operating system) for a particular second computing device may be taken into account automatically over time. While initially the one or more expected erasure process properties may be determined based on the erasure reports for the previous version of that particular second computing device or of the operating system, once erasure reports concerning the new version of that particular second computing device or of the operating system start being accumulated possible changes in any expected erasure process properties are quickly taken into account in the determining of the expected erasure process properties by the remote computing system.

In some embodiments, the first computing device may be configured to perform any of the processes described in relation to Figures 2 to 5 simultaneously for multiple second computing devices electrically connected to the first computing device (that is, the same first computing device).

In the following, an exemplary use case for the embodiments from the point of view of an operator of a first computing device is discussed.

1. Paavo, erasure technician operating a first computing device according to embodiments, receives a batch of mobile phones (i.e., second computing devices according to embodiments) which need to be erased in accordance with an erasure process that fulfils "NIST Purge" level requirements as defined by NIST SP 800-88 R1, Guidelines for Media Sanitization. He sees that the shipment contains dozens of phones with different models from various manufacturers.

2. Paavo moves the shipment of mobile device next to his erasure station (i.e., the first computing device) with erasure client software providing intelligent guidance using a cloud service (i.e., using a remote computing system being specifically a cloud-based system).

3. Paavo starts to plug in devices and sees how the devices show up in the graphical user interface of the erasure station. In the background, a remote cloud service starts to process the devices' data (i.e., the one or more device parameters for each device) to provide him with guidance information that helps him to better schedule his work. He sees that each of the connected mobile phones goes into a pre-processing state (i.e., a device category is identified).

4. After a short time, Paavo sees in the graphical user interface that the expected erasure process properties for the mobile phones are being received from the cloud service. He sees the predicted success rate and estimated erasure time for the different erasure processes (or at least for one or more available erasure processes fulfilling "NIST Purge" level requirements).

5. The estimates provided by the cloud service (i.e., the remote computing system) look promising, except for one mobile phone. The expected erasure process properties for that mobile phone show that the expected erasure duration is unexpectedly long and the predicted success rate is poor.

6. Paavo takes a closer look at the phone's details (e.g., its device parameters) and because of his expertise he instantly notices that it is a part of a known bad patch of phones from a specific manufacturer. He decides that it is not worth handling the phone and discards it from the process.

7. The rest of the batch of mobile phones is good to go, so Paavo starts an erasure process fulfilling the "NIST Purge" level requirements, notes down the estimated completion time and carries on with his other work.

8. When the time is close to the estimated completion time, Paavo returns to the erasure station and sees that every device has finished with a successful completion of the erasure process.

Figure 6 illustrates an apparatus 601 configured to perform the functions described above in connection with a remote computing system such as remote computing system 101 shown in Figure 1. The apparatus may be an electronic device comprising electronic circuitries. The apparatus may be a separate network entity or a plurality of separate entities. The apparatus may comprise a control circuitry 620, such as at least one processor, and at least one memory 630 including a computer program code (software) 631 wherein the at least one memory and the computer program code (software) are configured, with the at least one processor, to cause the apparatus to perform any one of the embodiments of the remote computing system described above. The apparatus may comprise at least one database 632 which may comprise at least the erasure report database as described in relation to above embodiments.

The memory 630 may comprise a database 632 which may correspond to the erasure report database, as described in previous embodiments. The memory 630 may also comprise other databases which may or may not be related to the described erasure process estimation functionalities according to embodiments.

Referring to Figure 6, the control circuitry 620 may comprise at least erasure profiler circuitry 621. The erasure profiler circuitry 621 may be configured, for example, to perform at least some of blocks 201, 204, 205 and message 206 of Figure 2, blocks 301 to 311 of Figure 3 and blocks 501 to 503 of Figure 5.

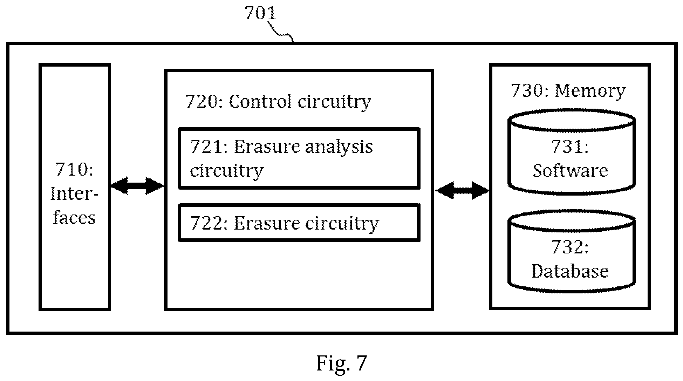

Figure 7 illustrates an apparatus 701 configured to perform the functions described above in connection with a first computing device, such as the first computing device 121 of Figure 1. The apparatus may be an electronic device comprising electronic circuitries. The apparatus may be a separate network entity or a plurality of separate entities. The apparatus may comprise a control circuitry 720 such as at least one processor, and at least one memory 730 including a computer program code (software) 731 wherein the at least one memory and the computer program code (software) are configured, with the at least one processor, to cause the apparatus to perform any one of the embodiments of the first computing device described above. The apparatus 701 may comprise, similar to the first computing device 121 of Figure 1, a user input device and/or a display (not shown in Figure 7).

The memory 730 may comprise a database 732 which may comprise, for example, information on one or more device parameters of one or more (second) computing devices electrically connected to the apparatus 701, expected erasure process properties for one or more different combinations of a computing device (targeted for erasure) and an erasure process and/or one or more erasure reports generated by the apparatus. The memory 730 may also comprise other databases which may or may not be related to the functionalities of the first computing device according to any of presented embodiments.

Referring to Figure 7, the control circuitry 720 may comprise erasure analysis circuitry 721 configured to provide the first computing device functionalities for retrieving the device parameter(s) of the (second) computing device targeted for erasure and providing analysis results regarding erasure processes for erasing a memory or part thereof of the second computing device to a user based on communication with a remote computing system and generating and sending to the remote computing system erasure reports according to any of presented embodiments. The control circuitry may further comprise erasure circuitry 722 configured to perform the selected erasure process. For example, the erasure analysis circuitry 721 may be configured to perform at least some of messages 202, 203 and/or blocks 207, 208 of Figure 2 and/or blocks 401 to 406, 408 to 410 of Figure 4. Moreover, the erasure circuitry 722 may be configured to perform at least messages 209 of Figure 2 and/or block 407 of Figure 4. In some other embodiments, the control circuitry 720 may be divided into three or more or only a single individual circuitry.

The apparatuses 601, 701 described in relation to Figures 6 and 7 may further comprise (communication) interfaces 610, 710 comprising hardware and/or software for realizing communication connectivity according to one or more communication protocols. The communication interface may provide the apparatuses with communication capabilities to communicate via a communications network and enable communication, for example, in the case of the apparatus 601 of Figure 6 with one or more (first) computing devices and in the case of the apparatus 701 of Figure 7 with a remote computing system. In the case of the apparatus 701 of Figure 7, the communication interfaces 710 may provide a connection to one or more second computing devices, for example, using any means discussed in relation to Figure 1.

The communication interfaces 610, 710 may comprise standard well-known components such as an amplifier, filter, frequency-converter, (de)modulator, and encoder/decoder circuitries and one or more antennas.

The memories 630, 730 of the apparatuses 601, 701 described in relation to Figures 6 and 7 may be implemented using any suitable data storage technology, such as semiconductor-based memory devices, flash memory, magnetic memory devices and systems, optical memory devices and systems, fixed memory and removable memory.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In an embodiment, at least some of the processes described in connection with Figures 2 to 5 may be carried out by an apparatus comprising corresponding means for performing at least some of the described processes. Some example means for performing the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form (processing) means or comprises one or more computer program code portions for performing one or more operations according to any one of the embodiments of Figures 2 to 5 or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chipset (procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with 2 to 5 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for performing the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. It will be obvious to a person skilled in the art that, as technology advances, the inventive concept can be implemented in various ways. Further, it is clear to a person skilled in the art that the described embodiments may, but are not required to, be combined with other embodiments in various ways.

It will be obvious to a person skilled in the art that, as the technology advances, the inventive concept can be implemented in various ways. The invention and its embodiments are not limited to the examples described above but may vary within the scope of the claims.

## Claims

1. A method comprising:

   maintaining, in an erasure report database, information on a plurality of erasure reports describing erasure processes carried out for a plurality of computing devices, wherein each erasure report comprises one or more erasure process properties for an erasure process used for erasing a memory or part thereof of a computing device and one or more device parameters characterizing the computing device for which the erasure process was performed;
   receiving, in a remote computing system, all or some of the one or more device parameters characterizing a second computing device via a communications network from a first computing device;
   comparing, by the remote computing system, in response to the receiving, the all or some of the one or more device parameters characterizing the second computing device to device parameters maintained in the erasure report database to find one or more erasure reports relevant for the second computing device;
   determining, by the remote computing system, one or more expected erasure process properties for each of at least one erasure process for erasing a memory or part thereof of the second computing device based on one or more erasure process properties of the one or more relevant erasure reports;
   sending, by the remote computing system, the one or more expected erasure process properties for said at least one erasure process to the first computing device via the communications network for facilitating decision-making of a user of the first computing device in regards to selecting a suitable erasure process for erasing the memory or part thereof of the second computing device; and
   storing, by the remote computing system, in response to receiving an erasure report for an erasure process carried out for the second computing device from the first computing device via the communications network, the erasure report to the erasure report database, wherein the erasure report for the second computing device comprises at least the one or more device parameters characterizing the second computing device and one or more erasure process properties for the erasure process.

2. The method of claim 1, wherein the comparing of the one or more device parameters to device parameters maintained in the erasure report database comprises:

generating, for each available erasure process, a vector based on at least one of the one or more device parameters, wherein each element of each vector has a numerical value representing a particular feature of the second computing device defined by a particular device parameter or multiple device parameters; and

comparing, for each available erasure process, the vector associated with the second computing device to one or more corresponding vectors generated for one or more computing devices of the plurality of computing devices based on the device parameters in the plurality of erasure reports; and, optionally,

wherein the comparing of the one or more device parameters to device parameters maintained in the erasure report database further comprises identifying a device category of the second computing device based on the one or more device parameters received from the first computing device, wherein the one or more corresponding vectors generated for the one or more computing devices of the plurality of computing devices are selected to be of the same device category as the second computing device; and, optionally,

wherein the comparing of the one or more device parameters to device parameters maintained in the erasure report database further comprises:

determining, for each available erasure process, whether one or more of the one or more vectors associated with the same device category as the second computing device match the vector of the second computing device according to pre-defined criteria; and

in response to one or more matches according to the pre-defined criteria being found, selecting, for each of said at least one erasure process, one or more erasure reports associated with said one or more matching vectors as a classification cluster for the second computing device, wherein the method further comprises:

performing, in response to the selecting of the classification cluster, the determining of the one or more expected erasure process properties for each of said at least one erasure process based on erasure reports associated with the classification cluster; and, optionally,

wherein the comparing of the vector to the one or more corresponding vectors comprises calculating, for each vector of the second computing device associated with a particular erasure process, a value of a distance metric quantifying a difference between the vector of the second computing device and the one or more corresponding vectors and the pre-defined criteria comprise a pre-defined upper threshold for the distance metric; and, optionally,

wherein the method further comprises: in response to determining that none of the one or more vectors associated with the same device category as the second computing device match the vector of the second computing device according to pre-defined criteria for any erasure process, sending, by the remote computing system, information on a failure of determining the one or more expected erasure process properties from the remote computing system to the first computing device via the communications network.

3. The method according to any preceding claim,

wherein the one or more expected erasure process properties for the erasure of the memory or part thereof of the second computing device are determined using one or more of statistical analysis methods, extrapolation, interpolation, averaging and calculating a median or a mode; and/or

wherein the first computing device is one of a laptop and a desktop computer and each of the second computing device and the plurality of computing devices is a mobile device.

4. The method according to any preceding claim, wherein the one or more erasure process properties for the erasure process in each erasure report comprise one or more of an outcome of the erasure process and a duration of the erasure process and/or the one or more expected erasure process properties for said at least one erasure process comprise, for each of said at least one erasure process, one or more of a probability of success of the erasure process and an expected duration of the erasure process.

5. The method according to any preceding claim, wherein the one or more device parameters retrieved by the first computing device and/or the one or more device parameters comprised in each erasure report comprise at least information on a clock speed of a processor of a corresponding computing device, a type of each or some of one or more memories of the corresponding computing device and a capacity of each or some of said one or more memories of the corresponding computing device.

6. A remote computing system comprising means for performing a method according to any of claims 1 to 5.

7. The remote computing system of claim 6, wherein the remote computing system is a cloud-based system and/or the erasure report database is a cloud-based database.

8. A non-transitory computer readable media having stored thereon instructions that, when executed by a computing device, cause the computing device to perform a method according to any of claims 1 to 5.

9. A method comprising:

retrieving, by a first computing device, one or more device parameters characterizing a second computing device electrically connected to the first computing device from a memory of the second computing device;
sending, by the first computing device, the one or more device parameters via a communications network to a remote computing system;
displaying, by the first computing device, in response to receiving one or more expected erasure process properties for at least one erasure process for erasing the memory or part thereof of the second computing device from the remote computing system via the communications network, information on the one or more expected erasure process properties for said at least one erasure process to a user via a display of the first computing device;
performing, by the first computing device, in response to receiving a user input confirming a selection of an erasure process of said at least one erasure process via a user input device of the first computing device, the selected erasure process for erasing the memory or part thereof of the second computing device;
generating, by the first computing device, in response to the selected erasure process concluding, an erasure report for the erasure process, wherein the erasure report for the erasure process comprises at least the one or more device parameters of the second computing device and one or more erasure process properties comprising at least an outcome of the erasure process; and
sending, by the first computing device, the erasure report to the remote computing system via the communications network.

10. The method of claim 9, wherein the one or more expected erasure process properties for said at least one erasure process comprise, for each of said at least one erasure process, one or more of an outcome of the erasure process and a duration of the erasure process and/or one or more of a probability of success of the erasure process and an expected duration of the erasure process.

11. A first computing device comprising means for performing a method according to claim 9 or 10.

12. The first computing device according to claim 11, wherein the first computing device is one of a laptop and a desktop computer and/or the second computing device electrically connected to the first computing device is a mobile device.

13. A non-transitory computer readable media having stored thereon instructions that, when executed by a computing device, cause the computing device to perform a method according to claim 9 or 10.

14. A system comprising:

a remote computing system according to claim 6 or 7; and
one or more first computing devices according to claim 11 or 12.

15. The system of claim 14, further comprising:
one or more second computing devices, wherein each second computing device comprises at least one memory and is connected electrically to one of the one or more first computing devices.

**Patentansprüche**

1. Verfahren, umfassend:

Verwalten, in einer Löschberichtdatenbank, von Informationen über eine Vielzahl von Löschberichten, die Löschprozesse beschreiben, die für eine Vielzahl von Rechenvorrichtungen ausgeführt werden, wobei jeder Löschbericht eine oder mehrere Löschprozesseigenschaften für einen Löschprozess, der zum Löschen eines Speichers oder eines Teils davon einer Rechenvorrichtung verwendet wird, und einen oder mehrere Vorrichtungsparameter umfasst, die die Rechenvorrichtung charakterisieren, für die der Löschprozess durchgeführt wurde;
Empfangen, in einem entfernten Rechensystem, aller oder einiger des einen oder der mehreren Vorrichtungsparameter, die eine zweite Rechenvorrichtung charakterisieren, über ein Kommunikationsnetz von einer ersten Rechenvorrichtung;

Vergleichen, durch das entfernte Rechensystem, infolge des Empfangens, aller oder einiger des einen oder der mehreren Vorrichtungsparameter, die die zweite Rechenvorrichtung charakterisieren, mit Vorrichtungsparametern, die in der Löschberichtdatenbank verwaltet werden, um einen oder mehrere Löschberichte zu finden, die für die zweite Rechenvorrichtung relevant sind;

Bestimmen, durch das entfernte Rechensystem, einer oder mehrerer erwarteter Löschprozesseigenschaften für jeden mindestens eines Löschprozesses zum Löschen eines Speichers oder eines Teils davon der zweiten Rechenvorrichtung, basierend auf einer oder mehreren Löschprozesseigenschaften des einen oder der mehreren relevanten Löschberichte;

Senden, durch das entfernte Rechensystem, der einen oder mehreren erwarteten Löschprozesseigenschaften für den mindestens einen Löschprozess an die erste Rechenvorrichtung über das Kommunikationsnetz, um einem Benutzer der ersten Rechenvorrichtung eine Entscheidungsfindung hinsichtlich eines Auswählens eines geeigneten Löschprozesses zum Löschen des Speichers oder eines Teils davon der zweiten Rechenvorrichtung zu erleichtern; und

Speichern, durch das entfernte Rechensystem, infolge eines Empfangens eines Löschberichts für einen Löschprozess, der für die zweite Rechenvorrichtung von der ersten Rechenvorrichtung ausgeführt wird, über das Kommunikationsnetz, des Löschberichts in der Löschberichtdatenbank, wobei der Löschbericht für die zweite Rechenvorrichtung mindestens einen oder mehrere Vorrichtungsparameter, die die zweite Rechenvorrichtung charakterisieren, und eine oder mehrere Löschprozesseigenschaften für den Löschprozess umfasst.

**2.** Verfahren nach Anspruch 1, wobei das Vergleichen des einen oder der mehreren Vorrichtungsparameter mit in der Löschberichtdatenbank verwalteten Vorrichtungsparametern Folgendes umfasst:

Erzeugen, für jeden verfügbaren Löschprozess, eines Vektors basierend auf mindestens dem einen oder den mehreren Vorrichtungsparametern, wobei jedes Element jedes Vektors einen numerischen Wert aufweist, der ein bestimmtes Merkmal der zweiten Rechenvorrichtung darstellt, das durch einen bestimmten Vorrichtungsparameter oder mehrere Vorrichtungsparameter definiert ist; und

Vergleichen, für jeden verfügbaren Löschprozess, des Vektors, der mit der zweiten Rechenvorrichtung verknüpft ist, mit einem oder mehreren entsprechenden Vektoren, die für eine oder mehrere Rechenvorrichtungen der Vielzahl von Rechenvorrichtungen erzeugt wurden, basierend auf den Vorrichtungsparametern in der Vielzahl von Löschberichten; und optional, wobei das Vergleichen der einen oder mehreren Vorrichtungsparameter mit den in der Löschberichtdatenbank verwalteten Vorrichtungsparametern weiter Identifizieren einer Vorrichtungskategorie der zweiten Rechenvorrichtung basierend auf dem einen oder den mehreren Vorrichtungsparametern umfasst, die von der ersten Rechenvorrichtung empfangen werden, wobei der eine oder die mehreren entsprechenden Vektoren, die für die eine oder mehreren Rechenvorrichtungen der Vielzahl von Rechenvorrichtungen erzeugt werden, so ausgewählt werden, dass sie derselben Vorrichtungskategorie wie die zweite Rechenvorrichtung angehören; und optional,

wobei das Vergleichen des einen oder der mehreren Vorrichtungsparameter mit in der Löschberichtdatenbank verwalteten Vorrichtungsparametern weiter Folgendes umfasst:

Bestimmen, für jeden verfügbaren Löschprozess, ob einer oder mehrere des einen oder der mehreren Vektoren, die mit derselben Vorrichtungskategorie wie die zweite Rechenvorrichtung verknüpft sind, gemäß vordefinierten Kriterien mit dem Vektor der zweiten Rechenvorrichtung übereinstimmen; und

infolgedessen, dass eine oder mehrere Übereinstimmungen gemäß den vordefinierten Kriterien gefunden wurden, Auswählen, für jeden des mindestens einen Löschprozesses, eines oder mehrerer Löschberichte, die mit dem einen oder den mehreren übereinstimmenden Vektoren verknüpft sind, als einen Klassifizierungscluster für die zweite Rechenvorrichtung, wobei das Verfahren weiter Folgendes umfasst:

Durchführen, infolge des Auswählens des Klassifizierungsclusters, des Bestimmens der einen oder mehreren erwarteten Löschprozesseigenschaften für jeden des mindestens einen Löschprozesses basierend auf mit dem Klassifizierungscluster verknüpften Löschberichten; und optional,

wobei das Vergleichen des Vektors mit einem oder mehreren entsprechenden Vektoren Berechnen, für jeden Vektor der zweiten Rechenvorrichtung, der mit einem bestimmten Löschprozess verknüpft ist, eines Distanzmetrikwerts, der eine Differenz zwischen dem Vektor der zweiten Rechenvorrichtung und dem oder den mehreren entsprechenden Vektoren quantifiziert, und wobei die vordefinierten Kriterien einen vordefinierten oberen Schwellenwert für die Distanzmetrik umfassen; und optional, wobei das Verfahren weiter Folgendes umfasst: infolgedessen, dass bestimmt wird, dass keiner des einen oder der mehreren Vektoren, die mit derselben Vorrichtungskategorie wie die zweite Rechenvorrichtung verknüpft sind, mit dem Vektor der zweiten Rechenvorrichtung gemäß vordefinierten Kriterien für einen beliebigen Löschprozess übereinstimmt, Senden, durch das entfernte Rechensystem, von Informationen über einen Fehlschlags des Bestimmens der einen oder mehreren erwarteten Löschprozesseigenschaften vom entfernten Rechensystem über das Kommunikationsnetz an die erste Rechenvorrichtung.

3. Verfahren nach einem vorstehenden Anspruch,

   wobei die eine oder mehreren zu erwartenden Löschprozesseigenschaften für das Löschen des Speichers oder eines Teils davon der zweiten Rechenvorrichtung unter Verwendung eines oder mehrerer von statistischen Analyseverfahren, Extrapolation, Interpolation, Mittelwertbildung und Berechnung eines Medians oder eines Modus bestimmt werden; und/oder wobei die erste Rechenvorrichtung eines von einem Laptop und einem Desktop-Computer ist und sowohl die zweite Rechenvorrichtung als auch die Vielzahl von Rechenvorrichtungen eine mobile Vorrichtung sind.

4. Verfahren nach einem vorstehenden Anspruch, wobei die eine oder mehrere Löschprozesseigenschaften in jedem Löschbericht eines oder mehreres eines Ergebnisses des Löschprozesses und einer Dauer des Löschprozesses umfassen und/oder die eine oder mehreren erwarteten Löschprozesseigenschaften für den mindestens einen Löschprozess für jeden des mindestens einen Löschprozesses eines oder mehreres einer Erfolgswahrscheinlichkeit des Löschprozesses und einer erwarteten Dauer des Löschprozesses umfassen.

5. Verfahren nach einem vorstehenden Anspruch, wobei der eine oder die mehreren Vorrichtungsparameter, die von der ersten Rechenvorrichtung abgerufen werden, und/oder der eine oder die mehreren Vorrichtungsparameter, die in jedem Löschbericht umfasst sind, mindestens Informationen über eine Taktfrequenz eines Prozessors einer entsprechenden Rechenvorrichtung, einen Typ jeder oder mehrerer eines oder mehrerer Speicher der entsprechenden Rechenvorrichtung und eine Kapazität jedes oder einiger des einen oder der mehreren Speicher der entsprechenden Rechenvorrichtung umfassen.

6. Entferntes Rechensystem, das Mittel zum Durchführen eines Verfahrens nach einem der Ansprüch 1 bis 5 umfasst.

7. Entferntes Rechensystem nach Anspruch 6, wobei das entfernte Rechensystem ein Cloud-basiertes System ist und/oder die Löschberichtdatenbank eine Cloud-basierte Datenbank ist.

8. Nichtflüchtiges, computerlesbares Medium, das Anweisungen darauf gespeichert aufweist, die, wenn sie von einer Rechenvorrichtung ausgeführt werden, die Rechenvorrichtung veranlassen, ein Verfahren nach einem der Ansprüche 1 bis 5 durchzuführen.

9. Verfahren, umfassend:

   Abrufen, durch eine erste Rechenvorrichtung, eines oder mehrerer Vorrichtungsparameter, die eine zweite Rechenvorrichtung charakterisieren, die elektrisch mit der ersten Rechenvorrichtung verbunden ist, aus einem Speicher der zweiten Rechenvorrichtung; Senden, durch die erste Rechenvorrichtung, des einen oder der mehreren Vorrichtungsparameter über ein Kommunikationsnetz an ein entferntes Rechensystem; Anzeigen, durch die erste Rechenvorrichtung, infolge eines Empfangens einer oder mehrerer erwarteter Löschprozesseigenschaften für mindestens einen Löschprozess zum Löschen des Speichers oder eines Teils davon der zweiten Rechenvorrichtung von dem entfernten Rechensystem über das Kommunikationsnetz, von Informationen über die eine oder mehreren erwarteten Löschprozesseigenschaften für den mindestens einen Löschprozess an einen Benutzer über eine Anzeige der ersten Rechenvorrichtung; Durchführen, durch die erste Rechenvorrichtung, infolge eines Empfangens einer Benutzereingabe, die eine Auswahl eines Löschprozesses des mindestens einen Löschprozesses über eine Benutzereingabevorrichtung der ersten Rechenvorrichtung bestätigt, des ausgewählten Löschprozesses zum Löschen des Speichers oder eines Teils davon der zweiten Rechenvorrichtung; Erzeugen, durch die erste Rechenvorrichtung, infolgedessen, dass der ausgewählte Löschprozess abgeschlossen wird, eines Löschberichts für den Löschprozess, wobei der Löschbericht für den Löschprozess mindestens den einen oder die mehreren Vorrichtungsparameter der zweiten Rechenvorrichtung und eine oder mehrere Löschprozesseigenschaften, umfassend mindestens ein Ergebnis des Löschprozesses, umfasst; und

Senden, durch die erste Rechenvorrichtung, des Löschberichts über das Kommunikationsnetz an das entfernte Rechensystem.

10. Verfahren nach Anspruch 9, wobei die eine oder mehreren erwarteten Löschprozesseigenschaften für den mindestens einen Löschprozess für jeden des mindestens einen Löschprozesses eines oder mehreres eines Ergebnisses des Löschprozesses und einer Dauer des Löschprozesses und/oder eines oder mehreres einer Erfolgswahrscheinlichkeit des Löschprozesses und einer erwarteten Dauer des Löschprozesses umfassen.

11. Erste Rechenvorrichtung, die Mittel zum Durchführen eines Verfahrens nach Anspruch 9 oder 10 umfasst.

12. Erste Rechenvorrichtung nach Anspruch 11, wobei die erste Rechenvorrichtung eines von einem Laptop und einem Desktop-Computer ist und/oder die zweite Rechenvorrichtung, die elektrisch mit der ersten Rechenvorrichtung verbunden ist, eine mobile Vorrichtung ist.

13. Nichtflüchtiges, computerlesbares Medium, das Anweisungen darauf gespeichert aufweist, die, wenn sie von einer Rechenvorrichtung ausgeführt werden, die Rechenvorrichtung veranlassen, ein Verfahren nach Anspruch 9 oder 10 durchzuführen.

14. System, umfassend:

ein entferntes Rechensystem nach Anspruch 6 oder 7; und

eine oder mehrere erste Rechenvorrichtungen nach Anspruch 11 oder 12.

15. System nach Anspruch 14, weiter umfassend: eine oder mehrere zweite Rechenvorrichtungen, wobei jede zweite Rechenvorrichtung mindestens einen Speicher umfasst und elektrisch mit einer der einen oder mehreren ersten Rechenvorrichtungen verbunden ist.

## Revendications

1. Procédé comprenant :

le maintien, dans une base de données de rapports d'effacement, d'informations sur une pluralité de rapports d'effacement décrivant des processus d'effacement effectués pour une pluralité de dispositifs informatiques, dans lequel chaque rapport d'effacement comprend une ou plusieurs propriétés de processus d'effacement pour un processus d'effacement utilisé pour effacer une mémoire ou une partie de celle-ci d'un dispositif informatique et un ou plusieurs paramètres de dispositif caractérisant le dispositif informatique pour lequel le processus d'effacement a été effectué ;

la réception, dans un système informatique distant, de tout ou partie des paramètres d'un ou plusieurs dispositifs caractérisant un second dispositif informatique via un réseau de communication à partir d'un premier dispositif informatique ;

la comparaison, par le système informatique distant, en réponse à la réception, de tout ou partie des paramètres d'un ou plusieurs périphériques caractérisant le second dispositif informatique aux paramètres de dispositif conservés dans la base de données de rapports d'effacement afin de trouver un ou plusieurs rapports d'effacement pertinents pour le second dispositif informatique ;

la détermination, par le système informatique distant, d'une ou plusieurs propriétés attendues du processus d'effacement pour chacun d'au moins un processus d'effacement pour effacer une mémoire ou une partie de celle-ci du second dispositif informatique sur la base d'une ou plusieurs propriétés du processus d'effacement du ou des rapports d'effacement pertinents ;

l'envoi, par le système informatique distant, d'une ou plusieurs propriétés attendues du processus d'effacement pour au moins un processus d'effacement au premier dispositif informatique via le réseau de communication afin de faciliter la prise de décision d'un utilisateur du premier dispositif informatique quant au choix d'un processus d'effacement approprié pour effacer la mémoire ou une partie de celle-ci du second dispositif informatique ; et

le stockage, par le système informatique distant, en réponse à la réception d'un rapport d'effacement pour un processus d'effacement effectué pour le second dispositif informatique depuis le premier dispositif informatique via le réseau de communication, du rapport d'effacement dans la base de données des rapports d'effacement, dans lequel le rapport d'effacement pour le second dispositif informatique comprend au moins un ou plusieurs paramètres de dispositif caractérisant le second dispositif informatique et une ou plusieurs propriétés du processus d'effacement pour le processus d'effacement.

2. Procédé selon la revendication 1, dans lequel la comparaison d'un ou plusieurs paramètres de dispositif avec les paramètres de dispositif conservés dans la base de données du rapport d'effacement comprend :

la génération, pour chaque processus d'effacement disponible, d'un vecteur basé sur au moins un des paramètres du dispositif, dans lequel chaque élément de chaque vecteur présente une valeur numérique représentant une caractéristique particulière du second dispositif informatique définie par un ou plusieurs paramètres de dispositif particuliers ; et

la comparaison, pour chaque processus d'effacement disponible, du vecteur associé au second dispositif informatique à un ou plusieurs vecteurs correspondants générés pour un ou plusieurs dispositifs informatiques parmi la pluralité de dispositifs informatiques, en fonction des paramètres de dispositif figurant dans la pluralité de rapports d'effacement ; et, éventuellement,

dans lequel la comparaison d'un ou plusieurs paramètres de dispositif avec les paramètres de dispositif conservés dans la base de données du rapport d'effacement comprend en outre l'identification d'une catégorie de dispositif du second dispositif informatique sur la base d'un ou plusieurs paramètres de dispositif reçus du premier dispositif informatique, dans lequel les vecteurs correspondants générés pour un ou plusieurs dispositifs informatiques de la pluralité de dispositifs informatiques sont sélectionnés de manière à appartenir à la même catégorie de dispositif que le second dispositif informatique ; et, éventuellement,

dans lequel la comparaison d'un ou plusieurs paramètres du dispositif avec les paramètres du dispositif conservés dans la base de données du rapport d'effacement comprend en outre :

la détermination, pour chaque processus d'effacement disponible, si un ou plusieurs vecteurs associés à la même catégorie de périphérique que le second dispositif informatique correspondent au vecteur du second dispositif informatique selon des critères prédéfinis ; et

en réponse à la découverte d'une ou plusieurs correspondances selon les critères prédéfinis, le procédé consiste à sélectionner, pour chacun desdits au moins un processus d'effacement susmentionnés, un ou plusieurs rapports d'effacement associés aux vecteurs correspondants, constituant ainsi un groupe de classification pour le second dispositif informatique, dans lequel le procédé comprend en outre :

la réalisation, en réponse à la sélection du groupe de classification, de la détermination des une ou plusieurs propriétés attendues du processus d'effacement pour chacun desdits au moins un processus d'effacement, sur la base des rapports d'effacement associés au groupe de classification ; et, éventuellement,

dans lequel la comparaison du vecteur à un ou plusieurs vecteurs correspondants comprend le calcul, pour chaque vecteur du second dispositif informatique associé à un processus d'effacement particulier, d'une valeur de mesure de distance quantifiant une différence entre le vecteur du second dispositif informatique et un ou plusieurs vecteurs correspondants, et les critères prédéfinis comprennent un seuil supérieur prédéfini pour la mesure de distance ; et, éventuellement,

dans lequel le procédé comprend en outre : en réponse à la constatation qu'aucun des vecteurs associés à la même catégorie de dispositif que le second dispositif informatique ne correspond au vecteur du second dispositif informatique selon des critères prédéfinis pour tout processus d'effacement, l'envoi, par le système informatique distant, d'informations sur un échec de détermination des propriétés attendues du processus d'effacement du système informatique distant au premier dispositif informatique via le réseau de communication.

3.  Procédé selon une quelconque revendication précédente,

dans lequel une ou plusieurs propriétés attendues du processus d'effacement pour l'effacement de la mémoire ou d'une partie de celle-ci du second dispositif informatique sont déterminées à l'aide d'un ou plusieurs procédés d'analyse statistique, d'extrapolation, d'interpolation, d'établissement de moyenne et de calcul d'une médiane ou d'un mode ; et/ou

dans lequel le premier dispositif informatique est soit un ordinateur portable, soit un ordinateur de bureau, et chacun des seconds dispositifs informatiques et de la pluralité de dispositifs informatiques est un appareil mobile.

4.  Procédé selon une quelconque revendication précédente, dans lequel la ou les propriétés du processus d'effacement de chaque rapport d'effacement comprennent un ou plusieurs éléments parmi le résultat et la durée du processus d'effacement et/ou les une ou plusieurs propriétés attendues du processus d'effacement pour ledit au moins un processus d'effacement comprennent, pour chacun desdits au moins un processus d'effacement, une ou plusieurs des propriétés suivantes : une probabilité de succès du processus d'effacement et une durée attendue du processus d'effacement.

5. Procédé selon une quelconque revendication précédente, dans lequel les un ou plusieurs paramètres de dispositif récupérés par le premier dispositif informatique et/ou les un ou plusieurs paramètres de dispositif compris dans chaque rapport d'effacement comprennent au moins des informations sur la fréquence d'horloge d'un processeur d'un dispositif informatique correspondant, le type de chacune ou de certaines des mémoires de ce dispositif informatique et la capacité de chacune ou de certaines de ces mémoires.

6. Système informatique distant comprenant des moyens pour exécuter un procédé selon l'une quelconque des revendications 1 à 5.

7. Système informatique distant selon la revendication 6, dans lequel le système informatique distant est un système basé sur le cloud et/ou la base de données des rapports d'effacement est une base de données hébergée dans le cloud.

8. Support non transitoire lisible par ordinateur sur lequel sont stockées des instructions qui, lorsqu'elles sont exécutées par un dispositif informatique, amènent le dispositif informatique à exécuter un procédé selon l'une quelconque des revendications 1 à 5.

9. Procédé comprenant :

la récupération, par un premier dispositif informatique, d'un ou plusieurs paramètres caractérisant un second dispositif informatique connecté électriquement au premier dispositif informatique à partir d'une mémoire du second dispositif informatique ;
l'envoi, par le premier dispositif informatique, d'un ou plusieurs paramètres du dispositif via un réseau de communication vers un système informatique distant ;
l'affichage, par le premier dispositif informatique, en réponse à la réception d'une ou plusieurs propriétés de processus d'effacement attendues pour au moins un processus d'effacement de la mémoire ou d'une partie de celle-ci du second dispositif informatique depuis le système informatique distant via le réseau de communication, d'informations sur les propriétés de processus d'effacement attendues pour ledit au moins un processus d'effacement à un utilisateur via un affichage du premier dispositif informatique ;
l'exécution, par le premier dispositif informatique, en réponse à la réception d'une entrée utilisateur confirmant la sélection d'un processus d'effacement d'au moins un processus d'effacement via un dispositif d'entrée utilisateur du premier dispositif informatique, du processus d'effacement sélectionné pour effacer la mémoire ou une partie de celle-ci du second dispositif informatique ;
la génération, par le premier dispositif informatique, en réponse à la conclusion du processus d'effacement sélectionné, d'un rapport d'effacement pour le processus d'effacement, dans lequel le rapport d'effacement pour le processus d'effacement comprend au moins un ou plusieurs paramètres du second dispositif informatique et une ou plusieurs propriétés du processus d'effacement comprenant au moins un résultat du processus d'effacement ; et
l'envoi, par le premier dispositif informatique, du rapport d'effacement au système informatique distant via le réseau de communication.

10. Procédé selon la revendication 9, dans lequel les propriétés attendues du processus d'effacement pour ledit processus d'effacement comprennent, pour chacun desdits au moins un processus d'effacement, un ou plusieurs éléments parmi un résultat du processus d'effacement et/ou une durée du processus d'effacement et/ou une ou plusieurs des probabilités de succès du processus d'effacement et/ou de la durée prévue de ce processus.

11. Premier dispositif informatique comprenant des moyens pour exécuter un procédé selon la revendication 9 ou 10.

12. Premier dispositif informatique selon la revendication 11, dans lequel le dispositif informatique est soit un ordinateur portable, soit un ordinateur de bureau et/ou le second dispositif informatique connecté électriquement au premier dispositif informatique est un dispositif mobile.

13. Support non transitoire lisible par ordinateur sur lequel sont stockées des instructions qui, lorsqu'elles sont exécutées par un dispositif informatique, amènent le dispositif informatique à exécuter un procédé selon la revendication 9 ou 10.

14. Système comprenant :

un système informatique distant selon la revendication 6 ou 7 ; et
un ou plusieurs premiers dispositifs informatiques selon la revendication 11 ou 12.

15. Système selon la revendication 14, comprenant en outre :
un ou plusieurs seconds dispositifs informatiques, dans lequel chaque second dispositif informatique comprend au moins une mémoire et est connecté électriquement à l'un des un ou plusieurs premiers dispositifs informatiques.

101: Remote computing system

103: Database

110: Network

130: Local system

100

120: Local system

127

121: First computing device

122: User input device

123: Display

126

124: Second computing device

125: Memory

Fig. 1

| Second computing device | First computing device | Remote computing system |
|---|---|---|

201: Maintain information on erasure reports in erasure report database

202: Retrieve device parameter(s)

203: Send device parameter(s)

204: Receive, compare device parameter(s) to device parameters in erasure report database

205: Determine one or more expected erasure process properties for erasure of memory of second computing device based on comparing

206: Send one or more expected erasure process properties

207: Receive, display

208: Receive user input confirming erasure

209: Perform erasure process

Fig. 2

301: Maintain information on erasure reports in erasure report database

302: Device parameter(s) received?

No

Yes

303: Identify device category of second computing device based on device parameter(s)

305: Generate vector(s) for at least received device parameters

306: Compare vector(s) generated for received device parameters to vector(s) generated for device parameters in erasure report database corresponding to same device category

307: Match(es) found?

No

311: Send information on failure to first computing device

Yes

308: Select erasure report(s) associated with match(es) as classification cluster for second computing device

309: Determine one or more expected erasure process properties for erasure of memory of second computing device based on classification cluster

310: Send information on one or more expected erasure process properties for erasure process(es) to first computing device

Fig. 3

24

```
┌─────────────────────────────────────────────┐
│ 401: Retrieve device parameter(s) of second  │
│              computing device                │
└─────────────────────────────────────────────┘
                      │
                      ▼
┌─────────────────────────────────────────────┐
│ 402: Send information on device parameter(s) to │
│           remote computing system            │
└─────────────────────────────────────────────┘
                      │
                      ▼
```

403: Expected erasure process properties received? ── Yes ──▶ 410: Display information on one or more expected erasure process properties for at least one erasure process to user via display

No

404: Information on failure received? ── No ──▶

Yes

405: Display information on failure to user via display

No ◀── 406: User input received?

Yes

407: Perform selected erasure process for erasing memory of second computing device.

408: Generate erasure report for erasure process which was performed

409: Send erasure report to remote computing system

Fig. 4

```
┌─────────────────────────────────────────────────┐
│  501: Maintain information on erasure reports in  │
│         erasure report database                   │
└─────────────────────────────────────────────────┘
                        │
                        ▼
        No          ╱───────────────────╲
   ◄────────────────   502: Erasure report
                    ╲      received?      ╱
                     ╲───────────────────╱
                              │ Yes
                              ▼
┌─────────────────────────────────────────────────┐
│  503: Store erasure report to erasure report      │
│         database                                  │
└─────────────────────────────────────────────────┘
```

Fig. 5

601

```
┌───────────────────────────────────────────────────────────────┐
│  ┌────────┐   ┌──────────────────────────┐   ┌──────────────┐  │
│  │ 610:   │   │ 620: Control circuitry    │   │ 630: Memory  │  │
│  │ Inter- │   │                           │   │ ┌──────────┐ │  │
│  │ faces  │◄─►│ ┌──────────────────────┐  │◄─►│ │  631:    │ │  │
│  │        │   │ │ 621: Erasure profiler│  │   │ │ Software │ │  │
│  │        │   │ │ circuitry            │  │   │ └──────────┘ │  │
│  │        │   │ └──────────────────────┘  │   │ ┌──────────┐ │  │
│  │        │   │                           │   │ │  632:    │ │  │
│  │        │   │                           │   │ │ Database │ │  │
│  │        │   │                           │   │ └──────────┘ │  │
│  └────────┘   └──────────────────────────┘   └──────────────┘  │
└───────────────────────────────────────────────────────────────┘
```

Fig. 6

Fig. 7

**EP 3 928 265 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RICHARD KISSEL et al.** Guidelines for Media Sanitization. *National Institute of Standards and Technology*, 15 August 2014